**Europäisches Patentamt**

**European Patent Office**

**Office européen des brevets**

(11) Veröffentlichungsnummer: **0 068 439**

**B1**

(12) # EUROPÄISCHE PATENTSCHRIFT

(45) Veröffentlichungstag der Patentschrift:
25.02.87

(21) Anmeldenummer: 82105540.7

(22) Anmeldetag: 24.06.82

(51) Int. Cl.⁴: **C 08 J 9/04**, C 08 J 9/14,
C 08 F 20/14, C 08 F 2/50

(54) Verfahren zum Herstellen von Gegenständen aus geschäumtem Polymethylmethacrylat.

(30) Priorität: 25.06.81 DE 3124980

(43) Veröffentlichungstag der Anmeldung:
05.01.83 Patentblatt 83/1

(45) Bekanntmachung des Hinweises auf die Patenterteilung:
25.02.87 Patentblatt 87/9

(84) Benannte Vertragsstaaten:
AT BE CH DE FR GB IT LI LU NL SE

(56) Entgegenhaltungen:
AT-B-322 204
DE-A-1 495 479
DE-B-1 264 067
FR-A-1 423 844

(73) Patentinhaber: Firma August Hohnholz, An der
Alsterschleife 17, D-2000 Hamburg 65 (DE)
(84) Benannte Vertragsstaaten:
AT BE CH DE FR GB IT LI LU NL SE

(73) Patentinhaber: Imchemie Kunststoff GmbH., Adolf-
Flöring- Strasse 22, D-5678 Wermelskirchen (DE)
(84) Benannte Vertragsstaaten: DE

(73) Patentinhaber: Melchior, Bernd, Burger Strasse 255,
D-5630 Remscheid (DE)
(84) Benannte Vertragsstaaten: DE

(72) Erfinder: Melchior, Bernd, Burger Strasse 255,
D-5630 Remscheid (DE)

(74) Vertreter: May, Hans Ulrich, Dr., Thierschstrasse
27, D-8000 München 22 (DE)

EP 0 068 439 B1

## Beschreibung

### Technisches Gebiet

Die Erfindung betrifft ein Verfahren zum Herstellen von Gegenständen aus geschäumtem Polymethylmethacrylat, welche insbesondere transparent sind und die Form von Bahnen, Platten, Formkörpern und Mehrschichtkörpern mit Schaumstoffkern haben können.

### Stand der Technik

Es ist bekannt, aus Kunststoff, z.B. Polyurethan, Schaumstoffe herzustellen. Grundsätzlich stehen dafür zwei Verfahren zur Verfügung. Beim ersten Verfahren wird das Ausgangsgemisch von Monomeren und Treibmittel unter gleichzeitigem Verschäumen in einem Einstufenverfahren polymerisiert. Nach diesem Verfahren lassen sich brauchbare Produkte nur erhalten, wenn die Monomeren rasch polymerisieren und damit ein mechanisch festes Produkt bilden, das durch die Gase oder Dämpfe des Treibmittels unter Bildung beständiger Zellen geschäumt werden kann.

Beim zweiten bekannten Verfahren wird zunächst das monomere Ausgangsmaterial mit dem zugesetzten Treibmittel ohne Verschäumen polymerisiert, worauf dann in einer zweiten Stufe das Polymerisat durch Erwärmen in einen plastischen oder fließfähigen Zustand gebracht und gleichzeitig das Treibmittel verdampft oder zersetzt wird, so daß im Kunststoff Gasblasen entstehen und ein Schaumstoff gebildet wird.

Keines dieser bekannten Verfahren führt bei Polymethacrylaten zum gewünschten Erfolg. Beim ersten Verfahren können während der Polymerisation des Acrylschaums die Bläschen (Zellen) nicht stabil gehalten werden. Durch die Polymerisation wächst die Oberflächenspannung der Bläschen, so daß diese platzen und sich vereinigen und damit der Schaum vor dem Aushärten zusammenbricht.

Das bekannte Zweistufen-Verfahren führt für Polymethacrylate ebenfalls nicht zum gewünschten Erfolg. Nach GB-PS 1 448 621 und FR-PS 1 423 844 soll ein Polymethacrylat verschäumt werden, indem zunächst ein Methacrylsäureester mit Treibmittelzusatz unter Bedingungen, daß das Treibmittel noch nicht wirksam werden kann, polymerisiert wird. In einer zweiten Stufe wird dann das erhärtete Polymethacrylat auf eine Erweichungstemperatur erwärmt, bei der das Treibmittel aktiv wird. Wegen des hohen Innendrucks enthält der Schaumstoff jedoch im wesentlichen nur kleine Bläschen. Versuche zeigen ferner, daß die Polymethacrylatmasse beim Schäumen nach allen Richtungen zu einem Schaum auseinandergetrieben wird, dessen Oberfläche wellig und verworfen ist. Die erhaltenen Produkte weisen außerdem eine geringe Transparenz, d.h. Durchsichtigkeit auf und lassen Licht nur diffus hindurchtreten, da das Licht an den zahlreichen kleinen Bläschen reflektiert wird.

Das in FR-A-1 423 844 beschriebene Zweistufen-Verfahren benutzt ein festes zersetzbares Treibmittel, nämlich Azobisisobutyronitril, welches keine klaren transparenten Schaumkunststoffe liefert, sondern selbst bei größerer Plastizität des Polymers zahlreiche kleine Bläschen und einen dadurch undurchsichtigen Schaumkunststoff erzeugt.

Das aus DE-A 1 495 479 bekannte Verfahren bezweckt eine kontinuierliche Herstellung von schäumbaren oder geschäumten Polyvinylverbindungen, worunter u.a. sowohl Polymethylmethacrylat als auch Polystyrol verstanden werden. Man geht aus von einer Lösung der Polymeren in Monomeren mit sirupöser Konsistenz oder auch von einem Vorpolymerisat und setzt flüchtige Treibmittel zu, worauf durch Erwärmen auspolymerisiert und gleichzeitig geschäumt wird. Es kann auch das treibmittelhaltige Vorprodukt nur polymerisiert und dann zerkleinert werden, so daß man ein schäumbares Produkt erhält. Ein klarer transparenter Schaumkunststoff mit großen Zellen wird auch nach diesem Verfahren nicht erhalten.

Es besteht nun ein Bedarf nach einem klar transparenten Schaumkunststoff auf der Basis von Polymethylmethacrylat, der eine hohe Lichtdurchlässigkeit bei gleichzeitig guter mechanischer Festigkeit und hohe Wärmedämmung sowie glatte Oberflächenstruktur aufweist und in Form von Bahnen, Platten, Formkörpern und Mehrschichtkörpern mit Schaumstoffkern erhältlich ist. Ein solcher Schaumkunststoff kann nach keinem der bisher bekannten Verfahren hergestellt werden und ist auch seiner Art nach grundsätzlich verschieden von bekannten lichtdurchlässigen extrudierten Schichtplatten aus Kunststoff, die im Inneren Stege oder dicht beieinander liegende Röhrchen aufweisen.

### Darstellung der Erfindung

Aufgabe der Erfindung ist es, ein Verfahren zur Herstellung von Gegenständen aus geschäumtem Polymethylmethacrylat anzugeben, das einen insbesondere transparenten Schaumkunststoff mit geschlossenen großen flächigen Zellen mit regelbarer Zellengröße, Zellenform und Zellendichte, regelbarer mechanischer Festigkeit und glatter porenfreier Oberfläche liefert und auch die Herstellung von Formkörpern und Mehrschichtenkörpern ermöglicht.

Diese Aufgabe wird gelöst durch das erfindungsgemäße Verfahren, bei dem

1) ein Gemisch, enthaltend:

   a) monomeres Methylmethacrylat;

   b) ein Plastifizierungsmittel, nämlich ein monomeres Alkylmethacrylat, worin die Alkylgruppe wenigstens 3 C-Atome aufweist;

c) ein bei der Polymerisationstemperatur nicht verdampfbares unter 100° C siedendes flüssiges inertes Treibmittel;

d) wenigstens einen Polymerisationskatalysator;

bei einer Temperatur unter der Verdampfungstemperatur des Treibmittels hergestellt und anschließend bei einem Druck über dem Verdampfungsdruck des Treibmittels bei der Polymerisationstemperatur gegebenenfalls in einer Form zu einem insbesondere plattenförmigen Körper polymerisiert wird und

2) der so hergestellte treibmittelhaltige feste Körper, gegebenenfalls nach mechanischer Bearbeitung, auf einer nicht haftenden Unterlage durch Erwärmen auf eine Temperatur über der Verdampfungstemperatur des Treibmittels und über der Erweichungstemperatur des Polymerisats geschäumt wird.

Bevorzugte Mengenverhältnisse für das Ausgangsgemisch sind:

a) 100 Gew.teile Methylmethacrylatmonomer

b) 5 - 40 Gewichtsteile, Plastifizierungsmittel

c) 10 - 100 Gewichtsteile Treibmittel

d) in üblicher Menge Polymerisationskatalysator

Von besonderer Bedeutung für das erfindungsgemäße Verfahren ist die Verwendung des Plastifizierungsmittels b), das ein monomeres Alkylmethacrylat ist, worin die Alkylgruppe wenigstens 3 C-Atome aufweist, vorzugsweise ein n-Butylmethacrylat-Monomer oder Ethylhexylmethacrylat-Monomer, wobei die Menge dieses Plastifizierungsmittels vorzugsweise 5 bis 25 Gewichtsteile, besonders vorzugsweise 10 bis 15 Gewichtsteile auf 100 Gewichtsteile des Methylmethacrylat-Monomers a) beträgt. Durch die Menge und Art des zugesetzten Plastifizierungsmittels lassen sich das Erweichungsverhalten des bei der Polymerisation erhaltenen treibmittelhalten festen Körpers aus Polymethylmethacrylat und damit die Verschäumungstemperatur sowie Zellengröße und Zellenanzahl und die mechanischen Eigenschaften des erhaltenen Gegenstandes aus geschäumtem Polymethylmethacrylat, besonders seine Festigkeit und Elastizität, regeln.

Als Treibmittel wird ein übliches flüssiges inertes Treibmittel mit einem Siedepunkt unter 100° C, besonders ein Paraffinkohlenwasserstoff oder Fluorkohlenwasserstoff, vorzugsweise Butan, Pentan, Hexan bzw. Trichlorfluormethan oder Trichlortrifluorethan verwendet, da die Siedepunkte solcher Treibmittel über der Raumtemperatur liegen, so daß das Mischen des Ausgangsgemisches einfach in einem Rührkessel bei Atmosphärendruck erfolgen kann.

Im Rahmen des erfindungsgemäßen Verfahrens kann die Polymerisation in jeder für Methylmethacrylat an sich bekannten Weise mit den entsprechenden Katalysatoren durchgeführt werden.

Als Polymerisationskatalysator d) kann insbesondere ein üblicher Peroxidkatalysator verwendet werden, der beim Erwärmen wirksam wird. Wenn zum Polymerisieren auf eine Temperatur über der Verdampfungstemperatur des Treibmittels erwärmt werden muß, wird selbstverständlich das Polymerisieren unter Druck vorgenommen, um ein vorzeitiges Freiwerden des Treibmittels zu verhindern.

In einer besonders vorteilhaften Ausführungsform des erfindungsgemäßen Verfahrens wird als Polymerisationskatalysator ein Fotoinitiator verwendet, welcher es ermöglicht, das Gemisch bei niedriger Temperatur, insbesondere etwa bei Raumtemperatur, durch Belichten mit einer auf den Fotoinitiator abgestimmten Strahlung, z.B. UV-Licht von 350 nm bei Verwendung eines für Acrylat-Monomer bekannten Fotoinitiators, zu polymerisieren. Bei dieser Ausführungsform der Polymerisation kann insbesondere der Polymerisationsverlauf durch Ein- und Ausschalten der Strahlenquellen so gesteuert werden, daß die Temperatur in der polymerisierenden Masse im Verlauf der exothermen Polymerisationsreaktion nicht über einen bestimmten Wert steigt, der knapp unterhalb der Verdampfungstemperatur des flüssigen Treibmittels liegt. Die Steuerung kann in einfacher Weise mittels eines Thermofühlers erfolgen. Bei einer Fotopolymerisation muß das zu polymerisierende treibmittelhaltige Gemisch selbstverständlich für die Strahlung zugänglich sein, also entweder eine freie Oberfläche bieten oder auf einer für die Strahlung durchlässigen Fläche oder vorzugsweise zwischen zwei solchen Flächen von einer oder vorzugsweise beiden Seiten bestrahlt werden. Als strahlungsdurchlässige Unterlage bzw. Abdeckung dienen vorzugsweise Glasplatten, zwischen denen mittels einer Dichtschnur in üblicher Weise ein das flüssige Gemisch aufnehmender Raum abgegrenzt ist. Die Fotopolymerisation läßt sich in Schichtdicken von etwa 1 bis über 50 mm durchführen; vorzugsweise liegt die Schichtdicke im Bereich von 1 bis 10 mm, was nach dem Schäumen Gegenstände von 4 bis 50 mm Schichtdicke liefert.

Beim Polymerisieren in der angegebenen Weise mit flüssigen Treibmitteln, was auch in einer Form erfolgen kann, erhält man als Zwischenprodukt einen glasklar durchsichtigen festen massiven Gegenstand aus treibmittelhaltigem Polymethylmethacrylat, dessen Dichte von Art und Menge des verwendeten Treibmittels abhängt. Z.B. liefert Trichlorfluormethan ein Polymerisat mit einer typischen Dichte von 1,45 g/cm$^3$. Dieses Zwischenprodukt ist ebenso wie übliches Polymethylmethacrylat mechanisch bearbeitbar, besonders schneidbar und sägbar. Es läßt sich bequem transportieren und lagern, falls es nicht sogleich der zweiten Verfahrensstufe zugeführt wird, in welcher es durch Erwärmen auf eine Temperatur über der Verdampfungs- bzw. Zersetzungstemperatur des Treibmittels und über der Erweichungstemperatur des Polymerisats geschäumt wird.

In dieser zweiten Verfahrensstufe wird der treibmittelhaltige feste Körper auf einer nichthaftenden Unterlage gehalten, um seine zweidimensionale Ausdehnung in die Länge und Breite beim Schäumen nicht zu behindern und die Ausbildung großer geschlossener Zellen im Schaumstoff zu ermöglichen. Als eine solche nichthaftende Unterlage ist besonders geeignet eine mit Polytetrafluorethylen beschichtete Glas- oder Metallfläche.

Wenn die Ausdehnung des schäumenden Gegenstandes nach oben begrenzt werden soll, ist in einem entsprechenden Abstand von der Unterlage eine Abdeckfläche mit zweckmäßigerweise ebenfalls nicht haftender Beschichtung vorgesehen, wobei der Abstand zwischen den beiden Flächen zweckmäßigerweise nicht wesentlich kleiner als die bei freiem Schäumen des treibmittelhaltigen festen Körpers erhaltene Schichthöhe desselben ist, um die Ausbildung großer Zellen nicht zu behindern. Wenn der schäumende Körper die Abdeckfläche berührt, so werden die Zellen an dieser ebenso wie an der Fläche der Unterlage abgeflacht, so daß sich gegebenenfalls eine im wesentlichen ebene Oberfläche des fertigen Gegenstandes aus geschäumtem Polymethylmethacrylat ergibt.

Besonders sei darauf hingewiesen, daß sowohl die Polymerisation des Gemisches in der ersten Verfahrensstufe als auch das Schäumen in der zweiten Verfahrensstufe jeweils für sich oder unmittelbar aufeinanderfolgend kontinuierlich auf einem nichthaftenden Förderband oder zwischen zwei solchen in etwa gleichbleibendem Abstand voneinander parallel und in der gleichen Richtung laufenden glatten Förderbändern kontinuierlich durchgeführt werden kann.

Die Größe und Form der Zellen wird einerseits durch die Art des Ausgangsgemisches, besonders Art und Menge der Bestandteile a, b und c desselben, durch die Erweichungstemperatur des Polymerisats der ersten Stufe und seine Dehnbarkeit bei der Schäumungstemperatur, wie auch durch die Geschwindigkeit des Erwärmens in der zweiten Verfahrensstufe beim Schäumen sowie die zum Schäumen angewandte Temperatur beeinflußt. Im allgemeinen ist bei Verwendung eines flüssigen Treibmittels mit einem Siedepunkt unter 100° C eine Schäumtemperatur von etwa 110° C, die gegebenenfalls auch höher, bis etwa 160° C liegen kann, und eine Schäumungsdauer von etwa 30 Minuten ausreichend.

Je höher die Temperatur beim Schäumen ist, desto rascher läuft der Schäumvorgang ab, und desto größere Blasen werden erhalten. Bei einer tieferen Temperatur verläuft der Schäumvorgang langsamer, jedoch erhält man ebenfalls große Blasen, wenn man länger bei dieser tieferen Temperatur hält. Allgemein wächst die Blasengröße, je länger man bei einer bestimmten gleichbleibenden Temperatur hält. Ein besonders gleichmäßiges Aufschäumen erhält man, wenn der Temperaturgradient in der Masse möglichst klein gehalten wird, z.B. durch Erwärmen der Masse mittels Hochfrequenz. Im übrigen eine dickere Platte zum vollständigen Aufschäumen länger erwärmt werden als eine dünnere Platte gleicher Zusammensetzung.

Die Dichte des nach dem Abkühlen erhaltenen fertigen geschäumten Gegenstandes läßt sich auf 0,03 bis 0,05 g/cm³ einstellen.

Die erfindungsgemäß erhaltenen Gegenstände aus geschäumtem Polymethylmethacrylat zeichnen sich aus durch verhältnismäßig große geschlossene Zellen von etwa 5 mm Durchmesser, die von dünnen Wänden begrenzt sind, so daß der klar durchsichtige Charakter des Polymethylmethacrylats auch im Schaumstoff deutlich erhalten ist und der Schaumstoff eine sehr gute Lichtdurchlässigkeit zeigt und klar erscheint, im Gegensatz zum milchigen Aussehen von Schaumstoffen mit kleinen Zellengrößen und dadurch bedingter vielfacher Lichtreflektion. Die mechanischen und physikalischen Eigenschaften des so erhaltenen Schaumstoffes aus Polymethylmethacrylat sind entsprechend denen des Grundstoffes Polymethylmethacrylat ausgezeichnet für die verschiedensten Verwendungszwecke. Besonders hervorzuheben sind eine gute Festigkeit und Elastizität, gute Bearbeitbarkeit, Unverrottbarkeit, Licht- und Wetterbeständigkeit und eine im wesentlichen glatte Oberfläche auf den Seiten, wo der sich bildende Schaum an eine nichthaftende Fläche oder Unterlage gestoßen ist. Solche Gegenstände sind daher besonders für bautechnische Zwecke, als Wärme- und Kälteisolationsplatten und Lichtkuppeln, aber auch für dekorative Zwecke bestens geeignet. Sie lassen sich außerdem bereits beim Schaumen des treibmittelhaltigen festen Körpers oder nach Beendigung dieses Schäumvorganges als fertige feste geschäumte Gegenstände mit einer Kaschierung aus transparenten Folien oder Platten aus Kunststoff bzw. Glas versehen, beschichten oder verkleben, so daß dadurch selbsttragende Schichtkörper mit hoher Lichtdurchlässigkeit und hoher Wärmeisolationsfähigkeit erhalten werden, die für vielfältige bautechnische Zwecke, besonders Gewächshäuser, mit großem Vorteil verwendbar sind.

Falls gewünscht, kann man dem Ausgangsgemisch auch Farbstoffe und/oder Füllstoffe oder Pigmente zusetzen, wenn gefärbte klartransparente, opake oder undurchsichtige geschäumte Gegenstände hergestellt werden sollen, welche die oben erwähnten vorteilhaften Eigenschaften aufweisen.

**Beispiel 1**

In einem Rührkessel werden 600 g Methylmethacrylat-Monomer (MMA), 72 g n-Butylmethacrylat-Monomer (BMA), 180 g Trichlorfluormethan (Siedepunkt 24° C) als Treibmittel, 1,2 g Benzoylperoxid als Wärmepolymerisationskatalysator und 1,2 g eines üblichen Fotoinitators bei einer Temperatur unter 20° C gemischt.

Die Mischung wird auf eine mit einer Trennbeschichtung versehene ebene Glasplatte in den auf dieser durch eine 4 mm hohe Dichtschnur umgrenzten Bereich gegossen, so daß die Schicht der flüssigen Mischung bis zur Oberkante der Dichtschnur reicht. Dann wird eine zweite ebene Glasplatte aufgelegt, welche auf der der Mischung zugewandten Seite ebenfalls mit einer Trennbeschichtung versehen ist.

Die beiden Glasplatten mit der zwischen ihnen befindlichen Mischung werden durch abnehmbare Halter zusammengehalten und die Anordnung wird in eine Belichtungskammer eingebracht, wo sie mit UV-Leuchtstoffröhren, deren Spektrum optimal für den gewählten Fotoinitiator ist, z.B. Leuchtstoffröhren Philips TW/05, deren Spektrum im wesentlichen bei 350 mm liegt, polymerisiert, wobei die Temperatur der Masse knapp unter der Siedetemperatur des Treibmittels, d.h. 24° C, gehalten wird, in dem die exotherme Polymerisationsreaktion bei Erreichen dieser gewünschten Temperatur durch Abschalten der Leuchtstoffröhren für eine bestimmte Zeit oder bis zum Unterschreiten einer Temperatur von 22° C unterbrochen wird. Die in dieser Weise durchgeführte Polymerisation ist nach etwa 1 Stunde beendet. Die Glasplatten werden voneinander getrennt, und man entnimmt eine glasklare feste massive Platte von treibmittelhaltigem Methylmethacrylat-Polymerisat, welches eine Dichte von 1,21 g/cm$^3$ aufweist.

Die erhaltene Platte wird als solche oder nach Zerschneiden zu Platten von gewünschter Größe durch Erwärmen geschäumt. Eine solche glasklare massive treibmittelhaltige Polymerisatplatte mit den Abmessungen 117 x 117 x 4 mm wird zwischen zwei wesentlich größere Glasplatten gebracht, die auf ihren einander zugewandten Seiten mit Polytetrafluorethylen als Trennmittel beschichtet und in 18 mm Abstand voneinander gehalten sind. Diese Anordnung wird in einem Ofen bei 110° C ca. 30 Minuten ausgeschäumt, wobei sich die Polymerisatplatte sowohl zweidimensional parallel zu den Glasplatten als auch in der Höhe ausdehnt, bis die Oberfläche der geschäumten Platte an die obere Glasplatte anstößt. Nach Beendigung des Schäumens läßt man die aus der Glasplattenanordnung entnommene noch warme Platte von geschäumtem Polymethylmethacrylat auf einer ebenen Oberfläche abkühlen, oder man entnimmt sie der im ganzen abgekühlten Glasplattenanordnung. Die erhaltene Platte von geschäumtem Polymethylmethacrylat hat die Abmessungen 330 x 330 x18 mm und die Dichte 0,028 g/cm$^3$. Sie ist starr, etwas elastisch und klar transparent mit geschlossenen Poren von etwa 5 mm Durchmesser. Diese platte ist bestens geeignet als gut lichtdurchlässiges Isoliermaterial, das zwischen durchsichtige Platten aus Glas oder Kunststoff eingebracht und gegebenenfalls mit diesen verbunden werden kann, um selbsttragende lichtdurchlässige Isolierplatten, besonders für bautechnische Zwecke, Lichtkuppeln und dgl. zu erhalten.

**Beispiel 2**

In der Ausgangsmischung des Beispiels 1 wurde der Fotoinitiator durch die gleiche Menge Wärmepolymerisationskatalysator (Benzoylperoxid) ersetzt, und die Polymerisation wurde in einer Druckkammer unter Erwärmen auf 85° C bei einem Druck über dem Verdampfungsdruck des Treibmittels bei dieser Temperatur durchgeführt. Die Polymerisation war in etwa 60 Minuten beendet. Nach dem Abkühlen wurde der Druckkammer eine glasklare feste massive Platte von treibmittelhaltigem Methylmethacrylat-Polymerisat entnommen, welche in gleicher Weise wie in Beispiel 1 geschäumt wurde und ein gleiches Produkt liefert.

**Beispiel 3**

In der Mischung des Beispiels 1 wurden die 180 g Trichlorfluormethan ersetzt durch 180 g Trichlortrifluorethan (Siedepunkt 47,6° C). Die Polymerisation wurde in gleicher Weise, jedoch bei einer Temperatur zwischen 40 und 42° C innerhalb 40 Minuten durchgeführt. Die erhaltene glasklare massive treibmittelhaltige Platte von Methylmethacrylat-Polymerisat lieferte beim Schäumen nach dem in Beispiel 1 angegebenen Verfahren ein gleiches Produkt wie das des Beispiels 1.

**Beispiel 4**

In der Mischung des Beispiels 1 wurden die 180 g Trichlorflourmethan ersetzt durch 180 g n-Pentan (Siedepunkt 36° C) als Treibmittel. Die Mischung wurde in gleicher Weise wie in Beispiel 1 polymerisiert, und die erhaltene massive treibmittelhaltige Platte von Methylmethacrylat-Polymerisat wurde wie in Beispiel 1 bei 110° C ausgeschäumt. Man erhielt ein trübes geschäumtes Polymethylmethacrylat mit einer Dichte von etwa 0,032 g/cm$^3$.

**Beispiel 5**

Der Mischung des Beispiels 1 wurden außerdem 0,6 g Trimethylolpropantrimethacrylat als Vernetzer zugesetzt (0,1 % bezogen auf Methylmethacrylat-Monomer). Die Mischung wurde in gleicher Weise wie in Beispiel 1 polymerisiert, und die erhaltene massive treibmittelhaltige Platte von Methylmethacrylatpolymerisat wurde wie in Beispiel 1, jedoch bei einer Temperatur von 100°C, geschäumt. Bei dieser Konzentration des Vernetzers läßt sich die massive treibmittelhaltige Platte noch schäumen, jedoch erhält man ein geschäumtes Produkt mit kleinen Blasen und einer Dichte von etwa 0,035 g/cm³.

**Patentansprüche**

1. Verfahren zum Herstellen von Gegenständen aus geschäumtem Polymethyl-methacrylat, wobei in einer ersten Stufe ein Gemisch aus monomerem Methylmethacrylat, einem bei der Polymerisationstemperatur nicht verdampfbaren Treibmittel und wenigstens einem Polymerisationskatalysator bei einer Temperatur unter der Verdampfungstemperatur des Treibmittels hergestellt und anschließend bei einem Druck über dem Verdampfungsdruck des Treibmittels bei der Polymerisationstemperatur zu einem insbesondere plattenförmigen Körper polymerisiert wird und in einer zweiten Stufe der so hergestellte treibmittelhaltige feste Körper durch Erwärmen auf eine Temperatur über der Verdampfungstemperatur des Treibmittels und über der Erweichungstemperatur des Polymerisats geschäumt wird, dadurch gekennzeichnet, daß das in der ersten Stufe hergestellte Gemisch als Treibmittel ein bei der Polymerisationstemperatur nicht verdampfbares, unter 100°C siedendes flüssiges inertes Treibmittel und als Plastifizierungsmittel ein monomeres Alkylmethacrylat, worin die Alkylgruppe wenigstens 3 C-Atome aufweist, enthält, und daß in der zweiten Stufe der treibmittelhaltige feste Körper, gegebenenfalls nach mechanischer Bearbeitung, auf einer nichthaftenden Unterlage unter Bildung eines transparenten Körpers mit geschlossenen flächigen Zellen geschäumt wird.

2. Verfahren nach Anspruch 1, dadurch gekennzeichnet, daß das in der ersten Stufe hergestellte Gemisch folgende Bestandteile enthält:
   a) 100 Gewichtsteile monomeres Methylmethacrylat,
   b) 5 bis 40 Gewichtsteile des Plastifizierungsmittels,
   c) 10 bis 100 Gewichtsteile des flüssigen inerten Treibmittels und
   d) wenigstens einen Polymerisationskatalysator.

3. Verfahren nach Anspruch 1 oder 2, dadurch gekennzeichnet, daß die Menge des Plastifizierungsmittels 5 bis 25 Gewichtsteile, vorzugsweise 10 bis 15 Gewichtsteile auf 100 Gewichtsteile des monomeren Methylmethacrylats beträgt.

4. Verfahren nach einem der Ansprüche 1 bis 3, dadurch gekennzeichnet, daß das Treibmittel c) ein Fluorkohlenwasserstoff oder Kohlenwasserstoff, vorzugsweise Trichlorfluormethan oder Trichlortrifluorethan bzw. Butan, Pentan oder Hexan ist.

5. Verfahren nach einem der Ansprüche 1 bis 4, dadurch gekennzeichnet, daß der Polymerisationskatalysator d) ein die Polymerisation des Gemisches bei dessen Erwärmen bewirkender Katalysator, besonders ein Peroxidkatalysator, ist und das Gemisch zum Polymerisieren erwärmt und unter einem Druck gehalten wird, der den Verdampfungsdruck des Treibmittels bei der Polymerisationstemperatur übersteigt.

6. Verfahren nach einem der Ansprüche 1 bis 4, dadurch gekennzeichnet, daß der Polymerisationskatalysator ein die Fotopolymerisation des Gemisches, besonders durch UV-Licht bewirkender Fotoinitiator ist und das Gemisch zum Polymerisieren mit einer die Polymerisation bewirkenden Strahlung bestrahlt wird, wobei die Polymerisationstemperatur unter der Verdampfungstemperatur des Treibmittels bei dem während der Polymerisation herrschenden Druck gehalten wird.

7. Verfahren nach einem der Ansprüche 1 bis 6, dadurch gekennzeichnet, daß die Polymerisation in einem Raum durchgeführt wird, der zwischen zwei in gleichbleibendem Abstand voneinander verlaufenden glatten Flächen zweier Platten, besonders Glasplatten, durch eine Dichtschnur begrenzt ist, welche eine geschlossene Kurve bildet und längs derselben beide Platten durchgehend berührt.

8. Verfahren nach einem der Ansprüche 1 bis 6, dadurch gekennzeichnet, daß die Polymerisation des Gemisches in dem seitlich begrenzten Zwischenraum zwischen zwei parallel in etwa gleichbleibendem Abstand voneinander in der gleichen Richtung laufenden glatten und vorzugsweise nichthaftenden Oberflächen zweier Förderbänder kontinuierlich durchgeführt wird.

9. Verfahren nach einem der Ansprüche 1 bis 8, dadurch gekennzeichnet, daß das Schäumen des treibmittelhaltigen Körpers in einer Form mit nichthaftenden Formwänden durchgeführt wird, deren Abstand etwas geringer ist als die beim freien Schäumen erreichbare größte Schichthöhe des Gegenstandes aus geschäumtem Polymethylmethacrylat.

10. Verfahren nach Anspruch 9, dadurch gekennzeichnet, daß das Schäumen des kontinuierlich erhaltenen plattenförmigen treibmittelhalten Körpers kontinuierlich durchgeführt wird.

## Claims

1. A process for preparing articles of foamed polymethyl methacrylate comprising, in a first step, mixing monomeric methyl methacrylate, a foaming agent that will not evaporate at the polymerization temperature and at least one polymerization catalyst, at a temperature below the evaporation temperature of the foaming agent, to form a mixture and then polymerizing said mixture at a pressure in excess of the evaporation pressure of the foaming agent at the polymerization temperature to form a solid body containing said foaming agent and having preferably a plate-like form, and, in a second step, heating said foaming agent-containing solid body to a temperature in excess of the evaporation temperature of the foaming agent and in excess of the softening temperature of the polymer to foam said solid body, characterized in that the foaming agent contained in the mixture prepared in the first step is a liquid inert foaming agent boiling at a temperature of less than 100°C and not evaporable at the polymerization temperature, and that said mixture contains a plasticizer selected from monomeric alkyl methacrylates in which the alkyl group comprises at least 3 carbon atoms, and that in the second step the foaming agent-containing solid body, if desired after having been subjected to mechanical working, is foamed on a non-adherent substrate to form a transparent body with closed planar cells.

2. The process of claim 1, characterized in that the mixture prepared in the first step contains:
   a) 100 parts by weight of monomeric methyl methacrylate;
   b) 5 to 40 parts by weight of the plasticizer;
   c) 10 to 100 parts by weight of the liquid inert foaming agent and
   d) at least one polymerization catalyst.

3. The process of any of claims 1 or 2, characterized in that the plasticizer is present in an amount of 5 to 25 parts by weight, preferably 10 to 15 parts by weight, per 100 parts of weight of the monomeric methyl methacrylate.

4. The process of any of claims 1 to 3, characterized in that the foaming agent c) is a fluorocarbon or hydrocarbon, preferably trichlorofluoromethane or trichlorotrifluoroethane, respectively butane, pentane or hexane.

5. The process of any of claims 1 to 4, characterized in that the polymerization catalyst d) is a catalyst effecting polymerization of the mixture upon heating thereof, especially a peroxide catalyst, and that said polymerization is carried out by heating said mixture and maintaining said mixture at a pressure in excess of the evaporation pressure of the foaming agent at the polymerization temperature.

6. The process of any of claims 1 to 4, characterized in that the polymerization catalyst is a photo-initiator causing photopolymerization of the mixture especially under the influence of ultraviolet light, and that said polymerization is carried out by irradiating said mixture with radiation which causes polymerization and wherein the polymerization temperature is maintained below the evaporation temperature of the foaming agent at the pressure during polymerization.

7. The process of any of claims 1 to 6, characterized in that said polymerization is conducted within a space which is defined by a sealing tape between two smooth surfaces of two plates, especially glass plates, extending at equal spacing relative to one another, and said sealing tape forming a closed curve and continuously contacting either of said plates along said curve.

8. The process of any of claims 1 to 6, characterized in that said polymerization of the mixture is conducted continuously within the laterally confined space between two smooth non-adherent surfaces of conveyor belts which extend parallel to and at approximately equal spacing from one another and move in the same direction.

9. The process of any of claims 1 to 8, characterized in that the foaming of the foaming agent-containing solid body is conducted within a mould comprising non-adherent mould walls, the spacing between said walls being slightly smaller than the maximum layer height of the article of foamed polymethyl methacrylate obtainable by unrestricted foaming.

10. The process of claim 9, characterized in that the foaming of the continuosly obtained plate-like foaming agent-containing solid body is performed continuously.

## Revendications

1. Procédé de préparation d'articles en mousse de poly(méthacrylate de méthyle), selon lequel, dans une première étape, on prépare un mélange de méthacrylate de méthyle monomère, d'un porogène non vaporisable à la température de polymérisation et d'au moins un catalyseur de polymérisation à une température inférieure à la température de vaporisation du porogène, puis l'on polymérise sous une pression supérieure à la pression de vaporisation du porogène à la température de polymérisation pour obtenir un objet ayant en particulier la forme de plaque et, dans une seconde étape, on fait mousser l'objet solide ainsi préparé, contenant du porogène, en le chauffant à une température supérieure à la température de vaporisation du porogène et supérieure à la température de ramollissement du polymère, procédé caractérisé en ce que le mélange préparé dans la première étape contient comme porogène un porogène inerte, liquide, non vaporisable à la température de polymérisation et bouillant audessous de 100°C et l'on utilise comme agent de plastification un méthacrylate d'alkyle monomère dont le groupe alkyle présente au moins 3 atomes de carbone, et en ce qu'on fait mousser dans la seconde étape l'objet solide contenant le porogène, éventuellement après travail mécanique, sur un support non adhérent avec formation d'un objet transparent comportant des alvéoles plats fermés.

2. Procédé selon la revendication 1, caractérisé en ce que le mélange préparé dans la première etape contient les constituants suivants:

a) 100 parties en poids de méthacrylate de méthyle monomère,

b) 5 à 40 parties en poids de l'agent de plastification,

c) 10 à 100 parties en poids du porogène inerte liquide, et

d) au moins un catalyseur de polymérisation.

3. Procédé selon la revendication 1 ou 2, caractérisé en ce que la quantité de l'agent de plastification est de 5 à 25 parties en poids, avantageusement 10 à 15 parties en poids pour 100 parties en poids du méthacrylate de méthyle monomère.

4. Procédé selon l'une des revendications 1 à 3, caractérisé en ce que le porogène c) est un fluorocarbure ou hydrocarbure, avantageusement du trichlorofluorométhane ou du trichlorotrifluoréthane ou du butane, du pentane ou de l'hexane.

5. Procédé selon l'une des revendications 1 à 4, caractérisé en ce que le catalyseur d) de polymérisation est un catalyseur provoquant lors de son échauffement la polymérisation du mélange, en particulier un catalyseur de type peroxyde, et en ce qu'on chauffe le mélange pour le faire polymériser et on le maintient sous une pression supérieure à la pression de vaporisation du porogène à la température de polymérisation.

6. Procédé selon l'une des revendications 1 à 4, caractérisé en ce que le catalyseur de polymérisation est un photoamorceur provoquant la photopolymérisation du mélange, en particulier sous l'effet de la lumière ultraviolette, et en ce qu'on irradie le mélange à polymériser à l'aide d'un rayonnement provoquant la polymérisation, en maintenant la température de polymérisation au-dessous de la température de vaporisation du porogène sous la pression régnant au cours de la polymérisation.

7. Procédé selon l'une des revendications 1 à 6, caractérisé en ce qu'on conduit la polymérisation dans un volume limité par un cordon d'étanchéité entre deux surfaces lisses ou deux plaques, en particulier des plaques de verre, situées à distance constante l'une de l'autre, le cordon formant une courbe fermée et étant en contact continu le long des deux mêmes plaques.

8. Procédé selon l'une des revendications 1 à 6, caractérisé en ce qu'on conduit en continu la polymérisation du mélange dans l'espace intermédiaire, latéralement délimité, entre deux surfaces de deux bandes transporteuses, parallèles, lisses et avantageusement non adhérentes, qui demeurent approximativement à la même distance l'une de l'autre et se déplacent dans la même direction.

9. Procédé selon l'une des revendications 1 à 8, caractérisé en ce qu'on conduit le moussage de l'objet contenant le porogène, dans un moule à parois non adhérentes, dont la distance est un peu plus petite que la plus grande hauteur de couche, pouvant être obtenue lors d'un moussage libre, de l'article en mousse de poly(méthacrylate de méthyle).

10. Procédé selon la revendication 9, caractérisé en ce qu'on conduit en continu le moussage de l'objet en forme de plaque, contenant du porogène et obtenu en continu.